# EUROPEAN PATENT APPLICATION

(11) **EP 4 644 880 A1**
(43) Date of publication of application: **05.11.2025**
(21) Application number: 24905156.6
(22) Date of filing: 09.05.2024
(51) Int. Cl.: G01N 21/88, B07C 5/34

(54) **DETECTION METHOD AND DEVICE FOR PRODUCT QUALITY DETECTION APPARATUS, AND ELECTRONIC APPARATUS**

(30) Priority: 18.02.2024 CN 202410179632
(71) Applicant: Contemporary Amperex Technology Co., Limited, Ningde, Fujian 352100 (CN)
(72) Inventor: XU, Deming, Ningde, Fujian 352100 (CN); MENG, Pengfei, Ningde, Fujian 352100 (CN); HUANG, Shumao, Ningde, Fujian 352100 (CN); CHEN, Yupei, Ningde, Fujian 352100 (CN)
(74) Representative: Gong, Jinping
(86) International application number: PCT/CN2024/091953
(87) International publication number: WO 2025/171694

(57) **Abstract**

Disclosed in the present application are an inspection method and apparatus of a product quality inspection device, and an electronic device thereof. The method including: acquiring first image data of a first product by a first imaging unit, wherein the first product is obtained through processing at a first process node in a production device, the first imaging unit corresponding to the first process node; generating a first inspection result of the first product according to the first image data and first inspection information corresponding to the first process node, wherein the first inspection information includes at least one first inspection item and a preset parameter range corresponding to each first inspection item; and transmitting the first inspection result to the production device to cause the production device to remove the first product from a production line if the first inspection result comprises that the first product has a defect.

## Description

### CROSS-REFERENCE TO RELATED APPLICATIONS

The present application claims priority to Chinese Patent Application No. 202410179632.2 entitled "an inspection method and apparatus of a product quality inspection device, and an electronic device thereof" filed on February 28, 2024, which is incorporated herein by reference in its entirety.

### TECHNICAL FIELD

The present application relates to the field of visual inspection, and in particular, to an inspection method and apparatus of a product quality inspection device, and an electronic device thereof.

### BACKGROUND

With development in modern manufacturing industry and development towards intelligent and automated manufacturing industry, there is a need for less and less human involvement in a working process of a production device, and in order to reduce occurrence of a defect in a product, there is also a general need for quality inspection of the product to reduce outflow of the defective product from a factory.

At present, visual inspection of products before shipment is often performed by providing a production device with a production quality inspection device, but due to different process levels of production devices or variations in specifications of produced products, misjudgment during operation of the production quality inspection device is likely to occur, resulting in insufficient accuracy of quality inspection of the products, and defective products are likely to flow out of the factory.

### SUMMARY

The present application provides an inspection method and apparatus of a product quality inspection device, and an electronic device thereof, which can reduce occurrence of misjudgment, improve inspection accuracy of a product, and reduce outflow of a defective product from a factory.

According to a first aspect, an embodiment of the present application provides an inspection method of a product quality inspection device, applied to the product quality inspection device, wherein the method comprises:
acquiring first image data of a first product by a first imaging unit, wherein the first product is obtained through processing at a first process node in a production device, the first imaging unit corresponding to the first process node;
generating a first inspection result of the first product according to the first image data and first inspection information corresponding to the first process node, wherein the first inspection information comprises at least one first inspection item and a preset parameter range corresponding to each first inspection item; and
transmitting the first inspection result to the production device to cause the production device to remove the first product from a production line if the first inspection result comprises that the first product has a defect.

On this basis, in a process of producing a product, it is possible to inspect a processed portion of a product for each process node in the production device so as to determine whether there is a defect in the processed portion of the product for each process node, which is advantageous in improving the inspection accuracy of the product. Taking the first process node as an example, the first image data of the first product is acquired by the first imaging unit, then the first inspection result of the first product is generated according to the first inspection information corresponding to the first process node, and then the first inspection result may be transmitted to the production device, and the production device may remove the first product from a production line in a timely manner if the first inspection result comprises that the first product has a defect, thereby reducing a risk that the defective product continues to be processed by other process nodes in the production device other than the first process node, which is advantageous in reducing occurrence of a defective product in finished products and reducing outflow of the defective product from the factory.

In some implementations of a first aspect, the first inspection item is used to indicate a first inspection part in the first product, the first inspection result comprising whether or not the first inspection part indicated by each of the first inspection items has a defect;
generating a first inspection result of the first product according to the first image data and first inspection information corresponding to the first process node comprises:
determining first collected data of the first product according to the first image data, wherein the first collected data comprises a collected value of at least one first product parameter of the first product, the first product parameter being in one-to-one correspondence with the first inspection item;
determining whether a first inspection part corresponding to each first inspection item has a defect according to the preset parameter range corresponding to each first inspection item and the first collected data; and
if the first inspection part corresponding to the first inspection item has a defect, associating the first inspection item with a defect identifier to obtain the first inspection result of the first product, wherein the defect identifier is used to indicate that the first inspection part has a defect.

In some implementations of the first aspect, it is determined that the first inspection part corresponding to the first inspection item has a defect if the collected value of the first product parameter corresponding to the first inspection item does not match the preset parameter range corresponding to the first inspection item.

In some implementations of the first aspect, acquiring first image data of a first product by a first imaging unit comprises:
acquiring a parameter information set corresponding to the production device, wherein the parameter information set comprises operating parameters of the first imaging unit;
acquiring the operating parameters of the first imaging unit in the parameter information set according to a node identifier of the first process node, and configuring the first imaging unit according to the operating parameters of the first imaging unit; and
photographing the first product by the configured first imaging unit to obtain first image data.

According to embodiments of the present application, by providing the parameter information set to the product quality inspection device, the product quality inspection device may configure the operating parameters of the imaging unit in combination with a particular process node. Since there are many operating parameters that need to be adjusted by the imaging unit itself, and there are also differences in operating parameters required for quality inspection of different imaging units, by providing effective operating parameters to a visual inspection system, it is advantageous to effectively manage an operating state of the imaging unit, and reduce a risk of mis-inspection and fault-inspection due to parameter variation and function non-activation.

In some implementations of the first aspect, before photographing the first product by the configured first imaging unit to obtain the first image data, the method further comprises:
photographing a second product by the configured first imaging unit to obtain second image data, wherein the second product comprises at least one second inspection part, and the second inspection part comprises first preset defects, wherein each first preset defect corresponds to a second inspection item;
determining second collected data of the second product according to the second image data, wherein the second collected data comprises a collected value of at least one second product parameter of the second product, the second product parameter being in one-to-one correspondence with the second inspection item;
determining whether each second inspection part has a defect according to the preset parameter range corresponding to each second inspection item and the second product parameter set, and obtaining a second inspection result of the second product; and
controlling the first imaging unit to suspend an operation if the second inspection result does not match defect information in which each of the second inspection parts comprises the first preset defect.

On this basis, after the configuration of the operating parameters of the imaging unit in the imaging unit is completed and before large-scale mass production is performed, the second image data is collected by the first imaging unit through first supplying the second product comprising a preset defect to the first imaging unit, and presence or absence of a defect in the second image data is verified by the first data processing unit. On this basis, it is possible not only to verify whether the operating parameters of the first imaging unit are configured correctly, but also to verify configuration information such as an image recognition algorithm and a defect judgment logic in the first data processing unit, so as to improve reliability and accuracy of collecting product data by the imaging unit and judging whether the product has a defect.

In some implementations of the first aspect, the method further comprises:
photographing the first product by the configured first imaging unit to obtain the first image data if the second inspection result matches the defect information in which each of the second inspection parts comprises the first preset defect.

On this basis, it is possible to verify configuration information such as an image recognition algorithm and a defect judgment logic in the first data processing unit, so as to improve reliability and accuracy of collecting product data by the imaging unit and judging whether the product has a defect.

In some implementations of the first aspect, after configuring the first imaging unit according to the operating parameters of the first imaging unit, the method further comprises:
transmitting the operating parameters according to the first imaging unit to a first monitoring device of the product quality inspection device.

On this basis, the operating parameters of the first imaging unit are uploaded to the first monitoring device in real time, so that the first monitoring device manages the operating parameters of the first imaging unit, thereby reducing the risk of mis-inspection due to parameter variation and function non-activation.

In some implementation manners of the first aspect, if the first inspection part corresponding to the first inspection item has a defect, after associating the first inspection item with the defect identifier to obtain the first inspection result of the first product, the method further comprises:
transmitting the first collected data and the first inspection result to a production execution device;
receiving a third inspection result of the first product transmitted by the production execution device; and
transmitting first control information to the production device to cause the production device to move the first product to a second process node in response to the first control information if the third inspection result of the first product is that the first product has no defect, wherein the second process node is a process node downstream of the first process node.

On this basis, the product quality inspection device transmits the first inspection result and the first collection data to the production execution device, so that the production execution device can obtain a re-inspection result of the first product; especially when it is confirmed that the first product has no defect, it can control the production device to transfer the first product to the second process node so as to continue the process on the second product, thereby a product of which an inspection result is mis-judged can also be transferred back to the production line for further processing, a product waste is reduced, a production cost is saved, a first product not confirmed to have no defect is not transferred back to the production line, a process waste is effectively reduced, and a production risk of defective product is reduced.

In some implementations of the first aspect, after generating a first inspection result of the first product according to first inspection information corresponding to the first process node, the method further comprises:
transmitting the first collected data and the first inspection result to a server, so that the server stores the first inspection result of the first product at the first process node.

On this basis, by storing the first collection data and the first inspection result of the first product in a preset server, a storage time period of the first collection data and the first inspection result can be easily adjusted, so that a traceability requirement can be satisfied, and occurrence of a situation where mis-inspection exists and there is no traceable inspection data such as image data and inspection result is reduced. In addition, image data of a defective product stored in a preset memory can also be used to optimize an algorithm model in the imaging unit, as well as to expand a verification image library of the imaging unit.

In some implementations of the first aspect, after generating a first inspection result of the first product according to first inspection information corresponding to the first process node, the method further comprises:
acquiring first inspection results respectively corresponding to a plurality of first products processed by the first process node within a preset time period;
determining a product defect rate corresponding to the first process node within the preset time period according to a plurality of the first inspection results; and
if the product defect rate is greater than a preset defect threshold, suspending acquisition of the image data of the first product, and transmitting second control information to the production device to cause the production device to suspend operation in response to the second control information.

On this basis, the production quality inspection device counts the product defect rate, which is conducive to promptly reflecting any problem that occurs in any link of product quality inspection, controlling suspension of a problematic link, helping to control the quantity of defective products produced, and reducing the risk of outflow of defective products.

In some implementations of the first aspect, after generating a first inspection result of the first product according to first inspection information corresponding to the first process node, the method further comprises:
supplying the first product to a second monitoring device of the product quality inspection device to cause the second monitoring device to generate a fourth inspection result of the first product;
if the fourth inspection result of the first product does not match the first inspection result, receiving third control information transmitted by the second monitoring device, wherein the fourth inspection result is inspected by the second monitoring device; and
controlling the first imaging unit to suspend acquisition of image data in response to the third control information.

On this basis, by randomly sampling a process node in the production device, product inspection and inspection on the imaging unit corresponding to the process node are performed, and any problem is promptly reflected when it is inspected in the process node or any link of the product quality inspection device, and operation of the problematic link is controlled to be suspended. It is beneficial for controlling the quantity of defective products produced and reducing the risk of outflow of defective products.

In some implementations of the first aspect, the production device comprises a plurality of process nodes, and the product quality inspection device comprises an imaging unit in one-to-one correspondence with each of the process nodes;
before acquiring first image data of a first product, the method further comprises:
acquiring a Measuring System Analyzing (MSA) guidance document set, wherein the MSA guidance document set comprises an MSA guidance document corresponding to each of the process nodes in the production device;
determining, according to indication information in the MSA guidance document corresponding to each of the process nodes, a processed product output channel corresponding to each of the process nodes, inspection information corresponding to each of the process nodes, and a data output type of an inspection result corresponding to the process node, wherein the data output type is a metrology type or a counting type;
acquiring image data respectively collected by a plurality of imaging units for an inspection sample set, wherein the inspection sample set comprises a plurality of inspection samples each comprising at least one third inspection item, wherein the plurality of inspection samples comprise a first predetermined number of non-defective products and a second predetermined number of defective products;
generating, for each of the process nodes, an inspection result of each third inspection item in each of the inspection samples according to image data collected by the imaging unit; and
determining an inspection accuracy rate of the product quality inspection device according to the inspection result of each of the third inspection items in each of the inspection samples and a reference result of each of the third inspection items in each of the inspection samples.

According to the embodiments of the present application, since the MSA-based guidance document is generated for the product quality inspection device, the product quality inspection device may perform inspection on the product quality inspection device itself in combination with the MSA guidance document and a preset self-inspection period, thereby improving reliability of the product quality inspection device in a practical application.

According to a second aspect, an embodiment of the present application provides an inspection apparatus of a product quality inspection device, comprising:
a first imaging unit, configured to acquire first image data of a first product by a first imaging unit, wherein the first product is obtained through processing at a first process node in a production device, the first imaging unit corresponding to the first process node;
a data processing unit, configured to generate a first inspection result of the first product according to first inspection information corresponding to the first process node, wherein the first inspection information comprises at least one first inspection item and a preset parameter range corresponding to each first inspection item; and
a transmitting unit, configured to transmit the first inspection result to the production device to cause the production device to remove the first product from a production line if the first inspection result comprises that the first product is defective.

On this basis, in a process of producing a product, it is possible to inspect a processed portion of a product for each process node in the production device so as to determine whether there is a defect in the processed portion of the product for each process node, which is advantageous in improving the inspection accuracy of the product. Taking the first process node as an example, the first image data of the first product is acquired by the first imaging unit, then the first inspection result of the first product is generated according to the first inspection information corresponding to the first process node, and then the first inspection result may be transmitted to the production device, and the production device may remove the first product from a production line in a timely manner if the first inspection result comprises that the first product has a defect, thereby reducing a risk that the defective product continues to be processed by other process nodes in the production device other than the first process node, which is advantageous in reducing occurrence of a defective product in finished products and reducing outflow of the defective product from the factory.

According to a third aspect, an embodiment of the present application provides an electronic device, which comprises a processor, a memory, and a program or an instruction stored in the memory and executable on the processor, wherein when executed by the processor, the program or the instruction implements the steps of the inspection method of the product quality inspection device according to the first aspect or any one of the implementations of the first aspect.

According to a fourth aspect, an embodiment of the present application provides a readable storage medium having stored thereon a program or an instruction which, when executed by a processor, implements the steps of the inspection method of the product quality inspection device according to the first aspect or any one of the implementations of the first aspect.

According to a fifth aspect, an embodiment of the present disclosure provides a computer program product in which instructions, when executed by a processor of an electronic device, cause the electronic device to perform the steps of the inspection method of the product quality inspection device according to the first aspect or any one of the implementations of the first aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the implementations below. The accompanying drawings are used only for the purpose of illustrating the implementations and are not to be construed as limitations on the present application. In the accompanying drawings:
FIG. 1 is a schematic flow chart of an inspection method of a product quality inspection device provided in an embodiment of the present application;
FIG. 2 is a schematic flow chart of another inspection method of a product quality inspection device provided in an embodiment of the present application;
FIG. 3 is a schematic structural diagram of an inspection apparatus of a product quality inspection device provided in an embodiment of the present application; and
FIG. 4 is a schematic structural diagram of an electronic device provided in an embodiment of the present application.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion.

The terms "first", "second", and the like in the specification and claims of the present application or in the accompanying drawings are used to distinguish between different objects, and are not used to describe a specific sequence or a primary-secondary relationship. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

With development in modern manufacturing industry and development towards intelligent and automated manufacturing industry, there is a need for less and less human involvement in a working process of a production device, and in order to reduce occurrence of a defect in a product, there is also a general need for quality inspection of the product to reduce outflow of the defective product from a factory.

At present, visual inspection of products before shipment is often performed by providing a production device with a production quality inspection device, but due to different process levels of production devices or variations in specifications of produced products, misjudgment during operation of the production quality inspection device is likely to occur, resulting in insufficient accuracy of quality inspection of the products, and defective products are likely to flow out of the factory.

In the related art, in order to improve the accuracy of quality inspection of products, the products are often inspected one by one or spot-inspected manually before the products are shipped. However, as the requirements for product quality in the production process are getting higher and higher, and structures of products are becoming more and more precise, the method of manual inspection not only brings great work pressure to the inspectors, but also may have problems such as inadequate inspection and low work efficiency. Consequently, it also leads to a relatively high labor cost.

Based on the above considerations, in order to reduce the occurrence of misjudgment, improve the inspection accuracy of products, and help reduce the outflow of defective products from the factory, the embodiments of present application provide an inspection method, and apparatus of a product quality inspection device, and electronic device thereof. Specifically, the production quality inspection device acquires first image data of a first product by a first imaging unit, wherein the first product is obtained through processing at a first process node in a production device; generates a first inspection result of the first product according to the first image data and first inspection information corresponding to the first process node, wherein the first inspection information includes at least one first inspection item and a preset parameter range corresponding to each first inspection item; and transmits the first inspection result to the production device to cause the production device to remove the first product from a production line if the first inspection result comprises that the first product has a defect.

On this basis, during the production process of products, when the first inspection result comprises that the first product has a defect, the production device can promptly remove the first product from the production line. This reduces the risk of the defective product being continuously processed by other process nodes in the production device except the first process node. It is beneficial for reducing the occurrence of defective products among the finished products and reducing the outflow of defective products from the factory.

The technical schemes described in the embodiments of the present application are suitable for manufacturing batteries, vehicles, and other products manufactured based on physical processes.

The inspection method, and apparatus of a product quality inspection device, and electronic device thereof provided by the embodiments of the present application will be described in detail below with reference to the accompanying drawings.

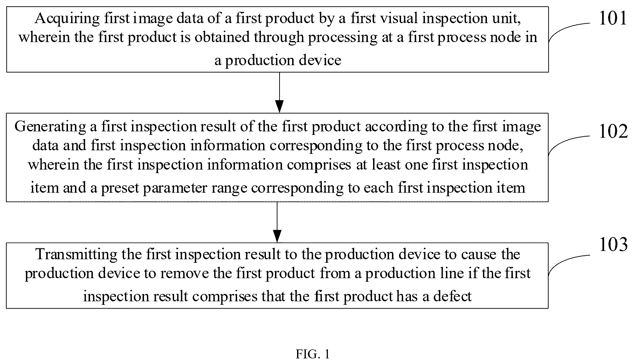

FIG. 1 is a schematic flow chart of an inspection method of a product quality inspection device provided in an embodiment of present application. The inspection method of the product quality inspection device can be applied to the product quality inspection device. As shown in FIG. 1, the inspection method of the product quality inspection device comprises steps 101 to step 103:
step 101: acquiring first image data of a first product by a first imaging unit, wherein the first product is obtained through processing at a first process node in a production device, the first imaging unit corresponding to the first process node;
step 102: generating a first inspection result of the first product according to the first image data and first inspection information corresponding to the first process node, wherein the first inspection information comprises at least one first inspection item and a preset parameter range corresponding to each first inspection item; and
step 103: transmitting the first inspection result to the production device to cause the production device to remove the first product from a production line if the first inspection result comprises that the first product has a defect.

The foregoing steps are described below with reference to specific embodiments.

Referring first to step 101 described above, the production device may comprise a plurality of process nodes, and the first process node may be any process node in the production device. An imaging unit corresponding one to-one to each process node may be comprised in the product quality inspection device.

Exemplarily, the production device may be used to produce an industrial product. For example, the production device is a pole piece manufacturing device and used to produce a pole piece by stirring a positive electrode material and a negative electrode material, and then performing processing such as coating, rolling, and slitting of the pole piece, thereby producing the pole piece, or the production apparatus may be used to produce an electrode assembly. For another example, the production device is an electrode assembly manufacturing device and used to obtain a battery cell by performing processing such as alignment, winding, or stacking of the pole piece and a separator, and the battery cell may be subjected to processing such as encapsulation and injection, thereby obtaining an electrode assembly. The production device and specific industrial products produced by the production device are not enumerated herein.

One or more process nodes may be comprised in the production device, wherein more refers to two or more. Exemplarily, the number of process nodes is multiple, taking the manufacturing device of the electrode assembly as an example, the plurality of process nodes may comprise, for example, winding, laminating, welding, drying, injecting, and sealing. It should be understood that the process nodes listed above are merely examples and are not intended as specific process limitations for processing the electrode assembly.

In some embodiments, the number of imaging units in the inspection method of the product quality inspection device may be one or more, and optionally, the imaging units are configured to correspond one-to-one to the process nodes, whereby the number of imaging units may be determined in combination with the number of process nodes. In the product quality inspection device, a data processing unit may be further comprised, by which the image data collected by the imaging unit may be analyzed to generate an inspection result of the product produced by the process node. The data processing unit may be, but is not limited to, a processor having a data processing function.

The first product is obtained by processing at the first process node in the production device, and on this basis, the first imaging unit may perform image acquisition on the first product to obtain the first image data. Optionally, the first image data may comprise one or more images, and the type of the images may be an RGB image, a grayscale image, an infrared image, a line scan image, or the like, which is not limited herein.

Next, referring to the above step 102, a first inspection result of the first product is generated according to the first image data and first inspection information corresponding to the first process node, wherein the first inspection information comprises at least one first inspection item and a preset parameter range corresponding to each first inspection item.

Optionally, a data set of inspection information may be stored in the product quality inspection device in advance, and the data set of inspection information may comprise an inspection item corresponding to each process node and a preset parameter range corresponding to the inspection item.

Exemplarily, the processed product at each process node comprises one or more inspection items corresponding to the processed product. For example, at a process node in which the positive and negative pole sheets are aligned, the inspection items may comprise preset inspection items such as a distance between tabs, a height of the tabs, and a wrinkle phenomenon between the positive and negative pole sheets and the separator. Correspondingly, the preset parameter range is a preset tab distance range, a preset tab height range, whether a wrinkle phenomenon exists, and the like, and the inspection items corresponding to each process node are not enumerated herein.

In some embodiments, an image recognition algorithm, and verifying logic, etc. may be configured for each process node in the product quality inspection device. Each imaging unit in the quality inspection device may comprise an industrial camera with high image stability, high transmission capability, and strong anti-interference capability. Specifically, for example, a camera based on a Charge Coupled Device (CCD) or a Complementary Metal Oxide Semiconductor (CMOS) chip may be used.

As a specific embodiment, the first imaging unit corresponds to the first process node. For the first product processed by the first process node, before it enters a next process node, the first imaging unit may acquire the first image data of the first product.

For the first product processed and obtained by the first process node in the production device, the product quality inspection device may find the first inspection information in the data set of the inspection information according to a node identifier of the first process node. The first inspection information comprises at least one first inspection item and the preset parameter range corresponding to each first inspection item.

On this basis, the product quality inspection device may identify related information of the first product in the first image data, and analyze whether the first product has a defect in combination with each first inspection item and the preset parameter range corresponding to each first inspection item. After the first imaging unit has completed the inspection of each first inspection item of the first product, the first inspection result of the first product may be obtained. The first inspection result of the first product may comprise the inspection result corresponding to each first inspection item.

The inspection result corresponding to each first inspection item may be that the inspected part corresponding to the first inspection item has a defect, or that the inspected part corresponding to the first inspection item has no defect. Alternatively, when the imaging unit fails to acquire the image data of the inspected part corresponding to the first inspection item and is unable to inspect the inspected part corresponding to the first inspection item, the inspection result of the inspected part corresponding to the first inspection item is empty at this time. Optionally, when it is impossible to inspect the inspected part corresponding to the first inspection item, it can be defaulted that the inspected part corresponding to the first inspection item has a defect to reduce occurrence of mis-inspection situations.

Next, referring to step 103, after the product quality inspection device obtains the first inspection result of the first product, it may transmit the first inspection result to the production device. Thus, after receiving the first inspection result, the production device may understand whether the first product has a defect according to the first inspection result. It can be understood that when the inspected part corresponding to any one of the first inspection items has a defect, it indicates that the first product has a defect. In addition, in order to reduce continuous processing of defective products on the production line, when the inspection result of the inspected part corresponding to the first inspection item is empty, the production device may remove the first product from the production line, thereby reducing the risk of mis-inspection of defective products.

According to the embodiment of the present application, the first imaging unit corresponds to the first process node. The first imaging unit acquires the first image data of the first product processed by the first process node, and generates the first inspection result of the first product according to the target inspection information corresponding to the first process node. On this basis, in a process of producing a product, it is possible to inspect a processed portion of a product for each process node so as to determine whether there is a defect in the processed portion of the product for each process node, which is advantageous in improving the inspection accuracy of the product. When there is a defect in the processed part of the product at the process node, the product may be promptly removed from the production line, thus reducing the risk of defective products being continuously processed by other process nodes of the production device. This is beneficial to reducing the occurrence of defective products among the finished products and reducing the outflow of defective products from the factory. At the same time, since the imaging unit may inspect the processed part of the product at each process node, it can effectively improve the inspection accuracy of visual inspection and reduce human participation in the inspection, which is beneficial to reducing labor costs.

In some embodiments of the present application, still referring to the above step 101, acquiring the first image data of the first product through the first imaging unit may specifically refer to the following steps:
acquiring a parameter information set corresponding to the production device, wherein the parameter information set comprises operating parameters of the first imaging unit;
acquiring the operating parameters of the first imaging unit in the parameter information set according to a node identifier of the first process node, and configuring the first imaging unit according to the operating parameters of the first imaging unit; and
photographing the first product by the configured first imaging unit to obtain first image data.

Specifically, the parameter information set corresponding to the production device may comprise the operating parameters of the imaging unit corresponding to each process node. The parameter information set corresponding to the production device may be stored in the product quality inspection device in advance.

For the first process node, the product quality inspection device may acquire the operating parameters of the first imaging unit from the parameter information set according to the node identifier of the first process node, and configure the first imaging unit according to the operating parameters of the first imaging unit, so that the first imaging unit may collect the first image data of the first product processed by the first process node based on the operating parameters, wherein the operating parameters of the first imaging unit, such as camera parameters and function activation parameters, are not be listed one by one herein.

Exemplarily, there are different production bases, different production devices in each production base, and each production device produces products of different models. On this basis, it is possible for a worker to comb each production base, each production device, and inspection needs of each different model of product to obtain the parameter information set of the production devices.

After configuring the first imaging unit according to the operating parameters of the first imaging unit, the first product may be photographed by the configured first imaging unit to obtain the first image data.

According to embodiments of the present application, by providing the parameter information set to the product quality inspection device, the product quality inspection device may configure the operating parameters of the imaging unit in combination with a particular process node. Since there are many operating parameters that need to be adjusted by the imaging unit itself, and there are also differences in operating parameters required for quality inspection of different imaging units, by providing effective operating parameters to the production quality inspection device, it is advantageous to effectively manage an operating state of the imaging unit, and reduce a risk of mis-inspection and fault-inspection due to parameter variation and function non-activation.

Optionally, after configuring the first imaging unit according to the operating parameters of the first imaging unit, the method further comprises: transmitting the operating parameters according to the first imaging unit to a first monitoring device of the product quality inspection device.

The operating parameters of the first imaging unit are uploaded to the first monitoring device in real time, so that the first monitoring device manages the operating parameters of the first imaging unit, thereby reducing the risk of mis-inspection due to parameter variation and function non-activation.

In some embodiments, before photographing the first product by the configured first imaging unit to obtain the first image data, the method further comprises:
photographing a second product by the configured first imaging unit to obtain second image data, wherein the second product comprises at least one second inspection part, and the second inspection part comprises first preset defects, wherein each first preset defect corresponds to a second inspection item;
determining second collected data of the second product according to the second image data, wherein the second collected data comprises a collected value of at least one second product parameter of the second product, the second product parameter being in one-to-one correspondence with the second inspection item;
determining whether each second inspection part has a defect according to the preset parameter range corresponding to each second inspection item and the second product parameter set, and obtaining a second inspection result of the second product; and
controlling the first imaging unit to suspend an operation if the second inspection result does not match defect information in which each of the second inspection parts comprises the first preset defect.

Specifically, after the operating parameters of the first imaging unit in the first imaging unit are configured and before it is officially put into use, a second product may be provided to the first imaging unit firstly, enabling the first imaging unit to collect the second image data of the second product based on the operating parameters.

The second product comprises preset defects, wherein each preset defect corresponds to a second inspection item. Optionally, the second inspection items may be consistent with the first inspection items, or they may be partially consistent with the first inspection items. Optionally, based on the preset defects of the second product, it is possible to determine whether the operation logic in the first data processing unit is effective. It is also possible to determine whether a light source system and a grayscale value algorithm are invalid through a photographic film. In addition, it is also possible to determine whether the recognition of critical defects in the product quality inspection device is invalid through the second product.

The product quality inspection device determines the second collected data of the second product according to the second image data. The second collected data comprises a collected value of at least one second product parameter of the second product, and the second product parameters correspond one-to-one with the second inspection items. Next, based on the preset parameter range corresponding to each second inspection item and the second product parameter set, it is determined whether there is a defect in each second inspected part, and the second inspection result of the second product is obtained. When the second inspection result does not match the defect information of the preset defect comprised in each second inspected part, the operation of the first imaging unit is controlled to be suspended.

It may be understood that, the first product is photographed by the configured first imaging unit to obtain the first image data if the second inspection result matches the defect information in which each of the second inspection parts comprises the first preset defect.

According to an embodiment of the present application, after the configuration of the operating parameters of the imaging unit in the imaging unit is completed and before large-scale mass production is performed, the second image data is collected by the first imaging unit through first supplying the second product comprising a preset defect to the first imaging unit, and presence or absence of a defect in the second image data is verified by the first data processing unit. On this basis, it is possible not only to verify whether the operating parameters of the first imaging unit are configured correctly, but also to verify configuration information such as an image recognition algorithm and a defect judgment logic in the first data processing unit, so as to improve reliability and accuracy of collecting product data by the imaging unit and judging whether the product has a defect.

In some embodiments of the present application, the first inspection item is used to indicate a first inspection part in the first product, the first inspection result comprising whether or not the first inspection part indicated by each of the first inspection items has a defect;

Still referring to the above step 102, the first inspection result of the first product is generated according to the first inspection information corresponding to the first process node, and reference may be made to steps 201 to 203 for details.
step 201: determining first collected data of the first product according to the first image data, wherein the first collected data comprises a collected value of at least one first product parameter of the first product, the first product parameter being in one-to-one correspondence with the first inspection item;
step 202: determining whether a first inspection part corresponding to each first inspection item has a defect according to the preset parameter range corresponding to each first inspection item and the first collected data; and
step 203: if a first inspection part corresponding to the first inspection item has a defect, associating the first inspection item with a defect identifier to obtain a first inspection result of the first product, where the defect identifier is used to indicate that the first inspection part has a defect.

In particular, the product quality inspection device may comprise a data processing unit, by which the image data collected by the imaging unit may be analyzed. For products processed at each process node, a corresponding image recognition algorithm, a verification logic, etc. may be pre-configured in the data processing unit. It may be understood that products processed at different process nodes are different, and the operation logic used in the imaging unit corresponding to each process node may vary. Optionally, the operation logic used in the imaging unit corresponding to each process node may be determined in combination with the specific process node corresponding to the imaging unit.

As a specific example, for the first product processed by the first process node, first collected data of the first product is determined according to analysis of the first image data, wherein the first collected data comprises a collected value of at least one first product parameter of the first product, the first product parameter being in one-to-one correspondence with the first inspection item. Exemplarily, continuing with the process node of aligning the positive and negative pole pieces as an example, the collected values of the first product parameters are respectively a distance between tabs, a height of the tabs, and whether there is a wrinkling phenomenon between the positive and negative pole pieces and the separator. Optionally, if there is the wrinkling phenomenon between the positive and negative pole pieces, the collected value may be 1; and if there is no wrinkling phenomenon between the positive and negative pole pieces, the collected value may be 0.

After obtaining the first collected data of the first product, it may be determined whether there is a defect in the first inspected part corresponding to each first inspection item according to the preset parameter range corresponding to each first inspection item in the first inspection information. If there is a defect in the first inspected part, the first inspection item is associated with the defect identifier, so as to generate the first inspection result of the first product.

Exemplarily, the defect identifier is used to indicate that there is a defect in the first inspected part. That is, there is a one-to-one correspondence between the defect identifier and the first inspection item, and first inspected parts corresponding to different first inspection items correspond to different defect identifiers.

If it is inspected that there is a defect in the first inspected part, the first inspection item is associated with the defect identifier corresponding to the first inspected part corresponding to the first inspection item.

On this basis, after the production device receives the first inspection result of the first product, it may directly inspect whether the first inspection result comprises the defect identifier. If the first inspection result comprises the defect identifier, the first product is removed from the production line.

According to the embodiment of the present application, if it is inspected that there is a defect in the first inspected part corresponding to the first inspection item, by establishing an associated defect identifier of the first inspection item, it is convenient for the production device to identify whether it is necessary to remove the first product from the production line after receiving the first inspection result. This is beneficial to improving the reliability of screening out defective products.

Specifically, it is determined that the first inspection part corresponding to the first inspection item has a defect if the collected value of the first product parameter corresponding to the first inspection item does not match the preset parameter range corresponding to the first inspection item.

Continuing with the process node of aligning the positive and negative pole pieces as an example, the first inspection item may be the distance of tabs, and the preset parameter range is a preset tab distance range. If the distance between the tabs falls within the preset tab distance range, then there is no defect in the first inspected part corresponding to the first inspection item. If the distance between the tabs does not fall within the preset tab distance range, then there is a defect in the first inspected part corresponding to the first inspection item. The first inspection item may be the height of tabs, and the preset parameter range is a preset tab height range. If the height of tabs falls within the preset tab height range, then there is no defect in the first inspected part corresponding to the first inspection item. If the height of tabs does not fall within the preset tab height range, then there is no defect in the first inspected part corresponding to the first inspection item. Herein, the inspection items corresponding to each process node are not enumerated herein.

According to the embodiments of the present application, each first inspection item may be quickly and accurately identified, and it may be determined whether the first product has a defect.

In some embodiments, the production device may also remove the first product from the production line when it does not receive the first inspection result of the first product within a preset time range, wherein the preset time range is determined according to a processing speed of the first process node.

Exemplarily, each imaging unit may be in communication connection with the production device. A communication manner between the imaging unit and the production device may be wired communication or wireless communication, and there is no specific limitation herein.

In the production device, time consumed for each process node to process one product may be estimated, so that average processing time for each process node to process one product may be determined. Correspondingly, a time interval for each imaging unit to transmit the inspection result to the production device may be consistent with the average processing time. In some embodiments, the longer the average processing time, the longer the time interval for the imaging unit to transmit the inspection result to the production device.

Optionally, the preset time range may be (t + a1, t + a2), wherein t is the average processing time for the process node to process one product, and a1 and a2 are preset positive numbers, with a1 < a2.

Next, the embodiments of the present application are continued to be introduced in combination with the first imaging unit. Specifically, based on the communication connection between the first imaging unit and the production device, the first imaging unit may transmit the first inspection result of the first product to the production device. Taking the first process node as an example, the average time consumed by the first process node to process one first product is 5 seconds. On this basis, the preset time range corresponding to the first imaging unit is (5 + a1, 5 + a2). If, after the production device receives the first inspection result of a previous first product, it does not receive the first inspection result within the time range of (5 + a1, 5 + a2), the production device may directly remove the first product from the production line.

According to the embodiments of present application, since the imaging unit and the production device follow a unified linkage specification, when the production device fails to receive the inspection result within the preset time range, it is default to remove the first product from the production line, thus reducing the risk of outflow of the defective products due to issues such as loss of communication signals.

In some embodiments of present application, the product quality inspection device may also be connected for communication with the production execution device. The production execution device may record and track in real time the operation data generated by the production device, and may also control the operation of the production device. Optionally, the production execution device may be implemented based on a Manufacturing Execution System (MES).

Specifically, if there is a defect in the first inspected part corresponding to the first inspection item, after associating the first inspection item with the defect identifier to obtain the first inspection result of the first product, the product quality inspection device may also: transmit the first collected data and the first inspection result to the production execution device; receive the third inspection result of the first product transmitted by the production execution device; and when the third inspection result of the first product is that the first product is not defective, transmit first control information to the production device, so that the production device moves the first product to a second process node in response to the first control information, wherein the second process node is a process node downstream of the first process node.

Exemplarily, in some embodiments, if the first product has a defect, after the production device removes the first product from the production line, other inspection device may be used to re-inspect the first product, so as to obtain the third inspection result of the first product. Optionally, the other inspection device may refer to another set of imaging units, or an inspection device that needs to be operated manually, or it may also refer to manual visual inspection. There is no specific limitation on a specific manner of obtaining the third inspection result herein.

After the production execution device acquires the third inspection result, the first control information may be transmitted to the production device to cause the production device to move the first product to a second process node in response to the first control information if the third inspection result of the first product is that the first product has no defect, wherein the second process node is a process node downstream of the first process node. It may be understood that the second process node is the process node following the first process node.

If the production device receives the first control information, it may move the first product to the second process node, so that the second process node may continue to process the first product.

According to the embodiments of the present application, the product quality inspection device transmits the first inspection result and the first collection data to the production execution device, so that the production execution device can obtain a re-inspection result of the first product; especially when it is confirmed that the first product has no defect, it can control the production device to transfer the first product to the second process node so as to continue the process on the second product, thereby a product of which an inspection result is mis-judged can also be transferred back to the production line for further processing, a product waste is reduced, a production cost is saved, a first product not confirmed to have no defect is not transferred back to the production line, a process waste is effectively reduced, and a production risk of defective product is reduced.

In some embodiments, after generating a first inspection result of the first product according to first inspection information corresponding to the first process node, the method further comprises: transmitting the first collected data and the first inspection result to a server, so that the server stores the first inspection result of the first product at the first process node.

Exemplarily, the product quality inspection device may also be directly connected for communication with the server, and transmit the first collected data and the first inspection result of the first product to the preset server, so as to store the first collected data and the first inspection result of the first product.

Optionally, after receiving the first collected data and the first inspection result of the first product, the production execution device may store the first collected data and the first inspection result of the first product in the server.

On this basis, by storing the first collection data and the first inspection result of the first product in a preset server, a storage time period of the first collection data and the first inspection result can be easily adjusted, so that a traceability requirement can be satisfied, and occurrence of a situation where mis-inspection exists and there is no traceable inspection data such as image data and inspection result is reduced. In addition, image data of a defective product stored in a preset memory can also be used to optimize an algorithm model in the imaging unit, as well as to expand a verification image library of the imaging unit.

In some embodiments, after generating a first inspection result of the first product according to first inspection information corresponding to the first process node, the product quality inspection device may further perform the following steps:
acquiring first inspection results respectively corresponding to a plurality of first products processed by the first process node within a preset time period; determining a product defect rate corresponding to the first process node within the preset time period according to a plurality of the first inspection results; and if the product defect rate is greater than a preset defect threshold, suspending acquisition of the image data of the first product, and transmitting second control information to the production device to cause the production device to suspend operation in response to the second control information.

Specifically, the product quality inspection device may conduct statistical analysis on the first inspection results within a preset time period. For example, for a plurality of consecutively received first inspection results, it may be determined whether the products have defects based on whether each first inspection result comprise a defect identifier. On this basis, the production control unit may count the number of defective products within the preset time period to obtain the product defect rate corresponding to the first process node within the preset time period.

If the product defect rate is higher than a preset defect threshold, there may be a problem of an operation logic error of an algorithm such as image recognition configured in the product quality inspection device, or there may be an operational error at the first process node. The problem of operation logic error is likely to lead to an unreliable inspection result of the first product, and it is easy to cause a situation where non-defective products are misdiagnosed as defective products. If there is an operation error at the first process node, it is likely to cause the first product to have a defect, that is, it is easy to produce defective products.

In order to reduce mis-judgments and the production quantity of defective products, the product quality inspection device may suspend continuously collecting the image data of the first product and suspend the first process node from continuing to operate, so as to facilitate the inspection of the first imaging unit and the first process node by the worker. Optionally, if there is an error in the operation logic, the worker may optimize the operation logic. For example, the worker may check whether there is a logical loophole in the visual inspection, and whether it can be compatible with different product processes, fluctuations in incoming materials, and other issues. If there is an operation error at the first process node, the process node may debug the first process node.

Optionally, the product quality inspection device may also acquire the defect identifier associated with the first inspection item in each first inspection result, so as to determine the defect rate that each first inspection item has a defect, and provide the defect rate that each first inspection item has the defect to the worker, which is beneficial to improving the efficiency of the worker in inspecting the production device or the product quality inspection device.

According to the embodiments of the present application, the production quality inspection device counts the product defect rate, which is conducive to promptly reflecting any problem that occurs in any link of product quality inspection, controlling suspension of a problematic link, helping to control the quantity of defective products produced, and reducing the risk of outflow of defective products.

Meanwhile, as the worker timely inspects the operation logic in the imaging unit and promptly adjusts the logical specification when the logical loophole occurs, the continuous optimization and updating of the operation logic in the production quality inspection device may be achieved.

In some embodiments, after generating a first inspection result of the first product according to first inspection information corresponding to the first process node, the production quality inspection device may further perform the following steps:
supplying the first product to a second monitoring device of the product quality inspection device to cause the second monitoring device to generate a fourth inspection result of the first product; if the fourth inspection result of the first product does not match the first inspection result, receiving third control information transmitted by the second monitoring device, wherein the fourth inspection result is inspected by the second monitoring device; and controlling the first imaging unit to suspend acquisition of image data in response to the third control information.

Exemplarily, the second monitoring device may refer to another set of imaging units, an inspection device that needs to be operated manually, or manual visual inspection. The specific inspection method of the second monitoring device is not specifically limited herein.

The product quality inspection device may randomly determine a target process node from one or more process nodes comprised in the production device. If the target process node is the first node, the production quality inspection device may provide the first product to the second monitoring device of the product quality inspection device.

The second monitoring device may conduct re-inspection on the first product and generate the fourth inspection result. It may be understood that a data set of inspection information may be stored in the second monitoring device in advance, and the data set of inspection information may comprise an inspection item corresponding to each process node and a preset parameter range corresponding to the inspection item.

The second monitoring device may obtain the first inspection information from the data set of the inspection information, and determine the inspection result of the first product, that is, the fourth inspection result, according to the first inspection items comprised in the first inspection information and the preset parameter range corresponding to each first inspection item.

When the fourth inspection result of the first product is inconsistent with the first inspection result, the second monitoring device may transmit the third control information to the product quality inspection device. After receiving the third control information transmitted by the second monitoring device, the product quality inspection device may, in response to the third control information, control the first imaging unit to suspend acquiring the image data.

When the fourth inspection result of the first product is inconsistent with the first inspection result, it is possible that there is a loophole in the operation logic of the product quality inspection device. An error in the operation logic may easily lead to an unreliable inspection result for the products processed at the first target process node, and may cause non-defective products to be misdiagnosed as defective ones. It is also possible that an operation error occurs at the first process node, wherein if there is an operation error occurs in the first process node, the products processed at the first target process node are likely to have defects, meaning that defective products are more likely to be produced.

According to the embodiments of the present application, by randomly sampling a process node in the production device, product inspection and inspection on the imaging unit corresponding to the process node are performed, and any problem is promptly reflected when it is inspected in the process node or any link of the product quality inspection device, and operation of the problematic link is controlled to be suspended. It is beneficial for controlling the quantity of defective products produced and reducing the risk of outflow of defective products.

In some embodiments, after the production device is initialized, the second monitoring device may also acquire the first N products processed by the production device, and inspect these N products according to the second preset inspection parameters to generate N sixth inspection results corresponding to the N products respectively, wherein N is a positive integer. If the N sixth inspection results indicate that there is a defective product among the products, the second monitoring device may control the production device to suspend operation.

Specifically, initializing the production device may refer to configuring the production parameters of each process node in the production device. After the production parameters of each process node are configured, the initialization of the production device is completed.

After the production device is initialized and before it is put into use, the second monitoring device may be used to inspect the first N products processed by the production device to determine whether the production device is initialized properly. Optionally, in the embodiments of present application, N is a positive integer, and a specific value of N is not limited herein.

If all of the N sixth inspection results corresponding to the N products indicate that the products have no defect, the production device may continue to operate. However, if it is determined from the N sixth inspection results corresponding to the N products respectively that there is a defective product among the N products, the second monitoring device may control the production device to stop operation. Next, it is necessary to conduct a risk assessment of the production device to reduce the risk of producing too many defective products.

According to the embodiments of present application, verifying whether the production device can operate normally before it is put into large-scale production is beneficial to reduce the risk of producing too many defective products, thereby saving production costs.

In some embodiments of the present application, in order to further improve the accuracy of the product quality inspection, before acquiring the first image data of the first product, the product quality inspection device may also perform steps 301 to 306 as follows:
step 301: acquiring a Measuring System Analyzing (MSA) guidance document set, wherein the MSA guidance document set comprises an MSA guidance document corresponding to each of the process nodes in the production device;
step 302: determining, according to indication information in the MSA guidance document corresponding to each of the process nodes, a processed product output channel corresponding to each of the process nodes, inspection information corresponding to each of the process nodes, and a data output type of an inspection result corresponding to the process node, wherein the data output type is a metrology type or a counting type;
step 303: acquiring image data respectively collected by a plurality of imaging units for an inspection sample set, wherein the inspection sample set comprises a plurality of inspection samples each comprising at least one third inspection item, wherein the plurality of inspection samples comprise a first predetermined number of non-defective products and a second predetermined number of defective products;
step 304: generating, for each of the process nodes, an inspection result of each third inspection item in each of the inspection samples according to image data collected by the imaging unit; and
step 305: determining an inspection accuracy rate of the product quality inspection device according to the inspection result of each of the third inspection items in each of the inspection samples and a reference result of each of the third inspection items in each of the inspection samples.

Exemplarily, the MSA guidance document set comprises an MSA guidance document corresponding to each of the process nodes in the production device.

There are different production bases, different production devices in each production base, and various production devices contain different process nodes. On this basis, the worker combs each production base and each production device, as well as the process nodes in each production device, so as to generate the Measurement Systems Analysis (MSA) guidance document corresponding to each process node.

In the MSA guidance document, instruction information in the MSA guidance document corresponds to each process node comprises, for example, determining a device identifier of the production device, determining an output channel of the processed products corresponding to each process node in the production device, and data output types of the inspection information corresponding to each process node and the inspection results of the process nodes.

Each process node may correspond to one or more output channels. The process nodes are, for example, nodes such as pairing, ultrasonic bonding, flexible connection, and casing insertion, wherein the casing insertion process node may comprise the output channel.

After the product quality inspection device performs the above actions according to the instruction information, an inspected sample may be provided to the product quality inspection device, and the product quality inspection device conducts inspection on the inspected sample, so as to determine whether the product quality inspection device can perform normal inspection.

The inspected sample provided to the product quality inspection device may comprise a first preset number of non-defective products and a second preset number of defective products, wherein
the first preset number of the non-defective products may also comprise products with different non-defective levels. For example, there are 10 non-defective products of the highest non-defective level and 15 non-defective products of a second non-defective level, wherein the highest non-defective level corresponds to products without a defect, and the second non-defective level corresponds to products with defects, but the existing defects do not affect classifying the products as the non-defective products.

A second preset number of the defective products may also comprise products with different severity levels. For example, there are 10 defective products of the highest severity level and 15 defective products of a third severity level. wherein the highest severity level corresponds to a product with a large number of defects and significant defects, and the second highest severity level corresponds to a product with fewer defects, but the presence of defects causes the product to be classified as a defective product.

After each imaging unit completes the collection of image data, the product quality inspection device may generate the inspection result of each third inspection item in each inspection sample according to the image data. The product quality inspection device may summarize the inspection result of each third inspection item, and conduct a one-to-one comparison between the inspection result of each third inspection item in each inspected sample and a reference result of each third inspection item in each inspected sample, so as to determine whether the inspection result of each third inspection item by the product quality inspection device is accurate, and determine the inspection accuracy rate of the product quality inspection device on this basis.

It can be understood that when the inspection accuracy rate of the product quality inspection device is greater than a preset accuracy rate threshold, the product quality inspection device may be put into an actual product inspection scenario.

However, when the inspection accuracy rate is less than or equal to the preset accuracy rate threshold, it is necessary to re-adjust the product quality inspection device. After the inspection accuracy rate of the product quality inspection device is greater than the preset accuracy rate threshold, it can be put into the actual product inspection scenario.

According to the embodiments of the present application, since the MSA-based guidance document is generated for the product quality inspection device, the product quality inspection device may perform inspection on the product quality inspection device itself in combination with the MSA guidance document and a preset self-inspection period, thereby improving reliability of the product quality inspection device in a practical application.

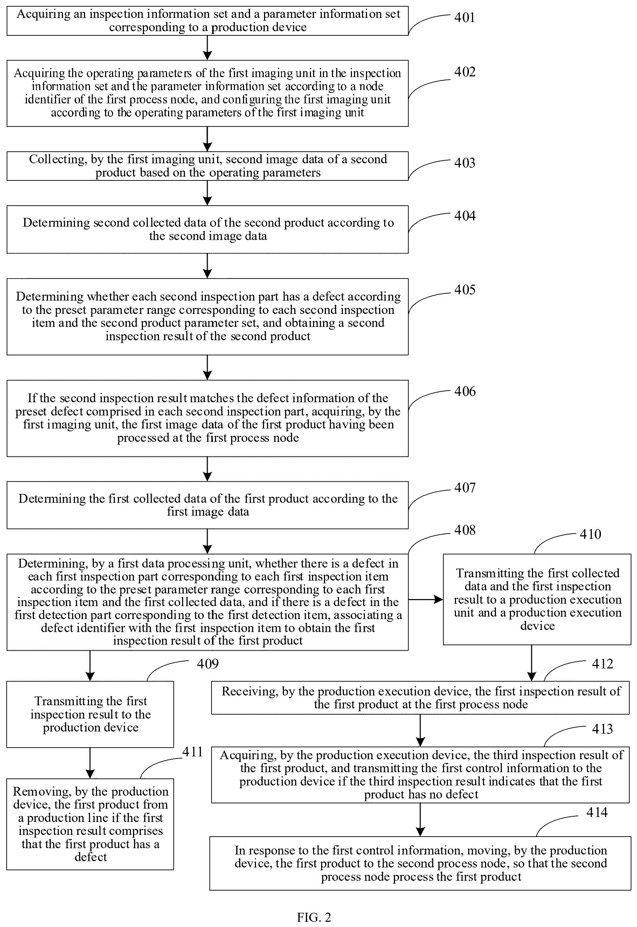

In order to introduce the embodiments of the present application more clearly, FIG. 2 is a schematic flow chart of an inspection method of another product quality inspection device provided in an embodiment of the present application. As shown in FIG. 2, the inspection method of the product quality inspection device may comprise step 401 to step 412 as follows:
step 401: acquiring a parameter information set corresponding to a production device,
wherein the parameter information set comprises operating parameters of the first imaging unit in the first process node;
step 402: acquiring the operating parameters of the first imaging unit in the parameter information set according to a node identifier of the first process node, and configuring the first imaging unit according to the operating parameters of the first imaging unit; and
step 403: collecting, by the first imaging unit, second image data of a second product based on the operating parameters,
wherein the second product comprises at least one second inspection part, and the second inspection part comprises preset defects, wherein each first preset defect corresponds to a second inspection item;
step 404: determining second collected data of the second product according to the second image data;
step 405: determining whether each second inspection part has a defect according to the preset parameter range corresponding to each second inspection item and the second product parameter set, and obtaining a second inspection result of the second product;
step 406: if the second inspection result matches the defect information of the preset defect comprised in each second inspection part, acquiring, by the first imaging unit, the first image data of the first product having been processed at the first process node;
step 407: determining the first collected data of the first product according to the first image data,
wherein the first collected data comprises a collected value of at least one first product parameter of the first product, the first product parameter being in one-to-one correspondence with the first inspection item;
step 408: determining whether there is a defect in each first inspection part corresponding to each first inspection item according to the preset parameter range corresponding to each first inspection item and the first collected data, and if there is a defect in the first inspection part corresponding to the first inspection item, associating a defect identifier with the first inspection item to obtain the first inspection result of the first product,
wherein the defect identifier is used to indicate that there is a defect in the first inspection part;
step 409: transmitting the first inspection result to the production device;
step 410: transmitting the first collected data and the first inspection result to a production execution device;
step 411: removing, by the production device, the first product from a production line if the first inspection result comprises that the first product has a defect;
and optionally, removing, by the production device, the first product from the production line if not receiving the first inspection result of the first product within a preset time range;
step 412: receiving, by the production execution device, the first inspection result of the first product at the first process node;
step 413: acquiring, by the production execution device, the third inspection result of the first product, and transmitting the first control information to the production device if the third inspection result indicates that the first product has no defect;
step 414: in response to the first control information, moving, by the production device, the first product to the second process node, so that the second process node process the first product.

According to the embodiments of the present application, the first imaging unit corresponds to the first process node. On this basis, in a process of producing a product, it is possible to inspect a processed portion of a product for each process node so as to determine whether there is a defect in the processed portion of the product for each process node, which is advantageous in improving the inspection accuracy of the product. Taking the first process node as an example, after acquiring the first inspection result, the first imaging unit transmits the first inspection result to the production device, and the production device may remove the first product from a production line in a timely manner if the first inspection result comprises that the first product has a defect, thereby reducing a risk that the defective product continues to be processed by other process nodes in the production device other than the first process node, which is advantageous in reducing occurrence of a defective product in finished products and reducing outflow of the defective product from the factory. At the same time, since the imaging unit may inspect the processed part of the product at each process node, it can effectively improve the inspection accuracy of visual inspection and reduce human participation in the inspection, which is beneficial to reducing labor costs.

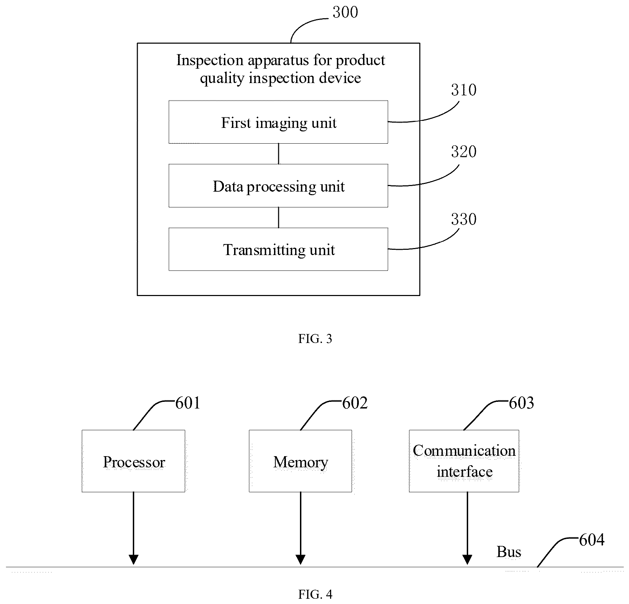

FIG. 3 is a schematic structural diagram of an inspection apparatus of a product quality inspection device provided by an embodiment of the present application, and as shown in FIG. 3, the inspection apparatus of the product quality inspection device comprises an imaging unit 310, a data processing unit 320, and a transmitting unit 330.

The first imaging unit 310 is configured to acquire first image data of a first product by a first imaging unit, wherein the first product is obtained through processing at a first process node in a production device, the first imaging unit 310 corresponding to the first process node.

The data processing unit 320 is configured to generate a first inspection result of the first product according to first inspection information corresponding to the first process node, wherein the first inspection information comprises at least one first inspection item and a preset parameter range corresponding to each first inspection item.

The transmitting unit 330 is configured to transmit the first inspection result to the production device to cause the production device to remove the first product from a production line if the first inspection result comprises that the first product is defective.

In some embodiments, the first inspection item is used to indicate a first inspection part in the first product, the first inspection result comprising whether or not the first inspection part indicated by each of the first inspection items has a defect.

The data processing unit 320 is further configured to determine first collected data of the first product according to the first image data, wherein the first collected data comprises a collected value of at least one first product parameter of the first product, the first product parameter being in one-to-one correspondence with the first inspection item.

The data processing unit 320 is further configured to determine whether a first inspection part corresponding to each first inspection item has a defect according to the preset parameter range corresponding to each first inspection item and the first collected data.

The data processing unit 320 is further configured to associate the first inspection item with a defect identifier to obtain the first inspection result of the first product if the first inspection part corresponding to the first inspection item has a defect, wherein the defect identifier is used to indicate that the first inspection part has a defect.

In some embodiments, the data processing unit 320 is further configured to determine that the first inspection part corresponding to the first inspection item has a defect if the collected value of the first product parameter corresponding to the first inspection item does not match the preset parameter range corresponding to the first inspection item.

In some embodiments, the apparatus further comprises:
an acquiring module, configured to acquire a parameter information set corresponding to the production device, wherein the parameter information set comprises operating parameters of the first imaging unit 310, wherein
the data processing unit 320 is further configured to acquire the operating parameters of the first imaging unit 310 in the parameter information set according to a node identifier of the first process node, and configure the first imaging unit 310 according to the operating parameters of the first imaging unit 310; and
the data processing unit 320 is further configured to photograph the first product by the configured first imaging unit 310 to obtain first image data.

In some embodiments, the data processing unit 320 is further configured to photograph a second product by the configured first imaging unit 310 to obtain second image data, wherein the second product comprises at least one second inspection part, and the second inspection part comprises first preset defects, wherein each first preset defect corresponds to a second inspection item;
the data processing unit 320 is further configured to determine second collected data of the second product according to the second image data, wherein the second collected data comprises a collected value of at least one second product parameter of the second product, the second product parameter being in one-to-one correspondence with the second inspection item;
the data processing unit 320 is further configured to determine whether each second inspection part has a defect according to the preset parameter range corresponding to each second inspection item and the second product parameter set, and obtain a second inspection result of the second product; and
the data processing unit 320 is further configured to control the first imaging unit 310 to suspend an operation if the second inspection result does not match defect information in which each of the second inspection parts comprises the first preset defect.

In some embodiments, the data processing unit 320 is further configured to photograph the first product by the configured first imaging unit 310 to obtain the first image data if the second inspection result matches the defect information in which each of the second inspection parts comprises the first preset defect.

In some embodiments, the transmitting unit 330 is further configured to transmit the operating parameters according to the first imaging unit 310 to a first monitoring device of the product quality inspection device.

In some embodiments, the transmitting unit 330 is further configured to transmit the first collected data and the first inspection result to a production execution device;
a receiving unit is comprised and configured to receive a third inspection result of the first product transmitted by the production execution device; and
the transmitting unit 330 is further configured to transmit first control information to the production device to cause the production device to move the first product to a second process node in response to the first control information if the third inspection result of the first product is that the first product has no defect, wherein the second process node is a process node downstream of the first process node.

In some embodiments, the transmitting unit 330 is further configured to transmit the first collected data and the first inspection result to a server, so that the server stores the first inspection result of the first product at the first process node.

In some embodiments, an acquiring unit is comprised and configured to acquire first inspection results respectively corresponding to a plurality of first products processed by the first process node within a preset time period;
the data processing unit 320 is further configured to determine a product defect rate corresponding to the first process node within the preset time period according to a plurality of the first inspection results; and
the data processing unit 320 is further configured to suspend acquisition of the image data of the first product if the product defect rate is greater than a preset defect threshold, and transmit second control information to the production device to cause the production device to suspend operation in response to the second control information.

In some embodiments, the transmitting unit 330 is further configured to supply the first product to a second monitoring device of the product quality inspection device to cause the second monitoring device to generate a fourth inspection result of the first product;
the receiving unit is further configured to receive third control information transmitted by the second monitoring device if the fourth inspection result of the first product does not match the first inspection result, wherein the fourth inspection result is inspected by the second monitoring device; and
the data processing unit 320 is further configured to control the first imaging unit 310 to suspend acquisition of image data in response to the third control information.

In some embodiments, the production device comprises a plurality of process nodes, and the product quality inspection device comprises an imaging unit in one-to-one correspondence with each of the process nodes;
the acquiring unit is further configured to acquiring a Measuring System Analyzing (MSA) guidance document set, wherein the MSA guidance document set comprises an MSA guidance document corresponding to each of the process nodes in the production device;
the data processing unit 320 is further configured to determine, according to indication information in the MSA guidance document corresponding to each of the process nodes, a processed product output channel corresponding to each of the process nodes, inspection information corresponding to each of the process nodes, and a data output type of an inspection result corresponding to the process node, wherein the data output type is a metrology type or a counting type;
the acquiring unit is further configured to acquire image data respectively collected by a plurality of imaging units for an inspection sample set, wherein the inspection sample set comprises a plurality of inspection samples each comprising at least one third inspection item, wherein the plurality of inspection samples comprise a first predetermined number of non-defective products and a second predetermined number of defective products;
the data processing unit 320 is further configured to generate, for each of the process nodes, an inspection result of each third inspection item in each of the inspection samples according to image data collected by the imaging unit; and
the data processing unit 320 is further configured to determine an inspection accuracy rate of the product quality inspection device according to the inspection result of each of the third inspection items in each of the inspection samples and a reference result of each of the third inspection items in each of the inspection samples.

It can be understood that the inspection apparatus of the product quality inspection device in the embodiments of the present application may correspond to an execution subject of the inspection method of the product quality inspection device provided in the embodiments of the present application. For specific details of the operations and/or functions of each module/unit of the inspection apparatus of the product quality inspection device, reference may be made to the description of the corresponding parts in the inspection method of the product quality inspection device provided in the embodiments of the present application. For the sake of brevity, details are not be repeated herein.

FIG. 4 is a schematic structural diagram of an electrode assembly provided in an embodiment of present application. As shown in FIG. 4, the device may comprise a processor 601 and a memory 602 storing computer program instructions.

Specifically, the processor 601 may comprise a Central Processing Unit (CPU), or an Application Specific Integrated Circuit (ASIC), or may be configured as one or more integrated circuits to implement the embodiments of the present application.

The memory 602 may comprise a large-capacity storage for information or instructions. For example, but not by way of limitation, the memory 602 may comprise a Hard Disk Drive (HDD), a floppy disk drive, a flash memory, an optical disc, a magnetooptical disc, a magnetic tape, or a Universal Serial Bus (USB) drive, or a combination of two or more of the above. In one instance, the memory 602 may comprise a removable or non-removable (or fixed) medium, or the memory 602 is a non-volatile solid-state memory. The memory 602 may be internal or external to the electronic device.

The memory may comprise a Read Only Memory (ROM), a Random Access Memory (RAM), a magnetic disk storage media device, an optical storage media device, a flash memory device, or an electrical, optical, or other physical/tangible memory storage device. Therefore, generally speaking, the memory comprise one or more tangible (non-transitory) computer-readable storage media (e.g., memory devices) encoded with a software that comprises computer-executable instructions, and when the software is executed (e.g., by one or more processors), it is operable to perform the operations described with reference to the method according to one aspect of the present disclosure.

The processor 601 reads and executes the computer program instructions stored in the memory 602 to implement the method described in the embodiments of the present application, and achieves corresponding technical effects that the method implemented in the embodiments of the present application can achieve. For the sake of concise description, details are not be repeated herein.

In one example, the electronic device may also comprise a communication interface 603 and a bus 604. As shown in FIG. 4, the processor 601, the memory 602, and the communication interface 603 are connected via the bus 604 to perform communication with each other.

The communication interface 603 is mainly configured to implement communication among modules, apparatuses, units and/or devices in the embodiments of the present application.

The bus 604 comprises a hardware, a software, or both, and couples components of an online information traffic charging device to each other. For example, but not by way of limitation, the bus may comprise an Accelerated Graphics Port (AGP) or other graphics buses, an Extended Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a video electronics standards association local (VLB) bus, or other suitable buses, or a combination of two or more of these. The bus 604 may comprise one or more buses, where appropriate. Although the embodiments herein describe and illustrate a particular bus, present application contemplates any suitable bus or interconnect.

The electronic device may execute the inspection method of the product quality inspection device in the embodiments of present application, thereby achieving the corresponding technical effects of the inspection method of the product quality inspection device described in the embodiments of present application.

In addition, in combination with the inspection method of the product quality inspection device in the above embodiments, the embodiments of present application may be implemented by providing a readable storage medium. The readable storage medium has stored thereon computer process instructions; and when executed by a processor, the computer program instructions implement the inspection method of the product quality inspection device according to any one of the above embodiments. An example of the readable storage medium may be a non-transitory machine-readable medium such as an electronic circuit, a semiconductor memory device, a Read-Only Memory (ROM), a floppy disk, a Compact Disc Read-Only Memory (CD-ROM), an optical disk, or a hard disk.

It should be clear that the present application is not limited to the specific configurations and processes described above and shown in the figures. For the sake of brevity, detailed descriptions of known methods are omitted herein. In the above embodiments, several specific steps are described and shown as examples. However, the method processes of the embodiments of the present application are not limited to the specific steps described and shown. Those skilled in the art may make various changes, modifications, and additions, or change the order of the steps after grasping the spirit of the present application.

The functional blocks shown in the above structural block diagrams may be implemented in a hardware, software, firmware, or a combination thereof. When implemented in the hardware, it may be, for example, an electronic circuit, an Application Specific Integrated Circuit (ASIC), an appropriate firmware, a plug-in, a function card. When implemented in the software, the elements of the present application are programs or code segments used to perform a required task. The programs or code segments may be stored in the machine-readable medium, or transmitted over a transmission medium or communication link through a data signal carried in a carrier wave. A "machine-readable medium" may comprise any medium that is capable of storing or transmitting information. Examples of the machine-readable medium comprise an electronic circuit, a semiconductor memory device, a Read-Only Memory (ROM), a flash memory, an Erasable Read Only Memory (EROM), a floppy disk, a Compact Disc Read-Only Memory (CD-ROM), an optical disc, a hard disk, an optical fiber medium, and a Radio Frequency (RF) link, etc. The code segments may be downloaded via a computer network such as the Internet, or an intranet.

It should also be noted that the exemplary embodiments mentioned in present application describe some methods or systems based on a series of steps or apparatuses. However, present application is not limited to the order of the above steps. That is, the steps may be executed in the order mentioned in the embodiments, or in an order different from that in the embodiments, or several steps may be executed simultaneously.

An embodiment of the present application further provides a computer-readable storage medium, wherein the computer-readable storage medium stores computer program instructions, and when executed by a processor, the computer program instructions implement the inspection method of a product quality inspection device according to the embodiments of the present application.

In addition, in combination with the inspection method, and apparatus of a product quality inspection device, and the readable storage medium thereof in the above embodiments, the embodiments of present application may be implemented by providing a computer program product. The instructions in the computer process product, when executed by a processor of an electronic device, cause the electronic device to perform any inspection method of a product quality inspection device according to the above embodiments.

The various aspects of the present disclosure have been described above with reference to the flow charts and/or block diagrams of the methods, apparatuses (systems), and computer program products according to the embodiments of the present disclosure. It should be understood that each block in the flow charts and/or block diagrams, as well as combinations of the blocks in the flow charts and/or block diagrams, may be implemented by computer program instructions. These computer program instructions may be provided to a processor of a general-purpose computer, a dedicated computer, or other programmable data processing apparatus to produce a machine, such that these instructions, when executed by the processor of the computer or another programmable data processing apparatus, enable the implementation of the functions/actions specified in one or more blocks of the flow charts and/or block diagrams. Such a processor may be, but is not limited to, the general-purpose processor, the dedicated processor, a special application processor, or a field-programmable logic circuit. It is also understandable that each block in the block diagrams and/or flow charts, as well as combinations of the blocks in the block diagrams and/or flow charts, may also be implemented by a dedicated hardware that performs specified functions or actions, or may be implemented by a combination of the dedicated hardware and computer instructions.

The above are only the specific implementations of the present application. Those skilled in the art may clearly understand that, for the convenience and brevity of description, for the specific working processes of the system, modules, and units described above, the corresponding processes in the foregoing method embodiments may be referred to, and details are not be repeated herein. It should be understood that the protection scope of the present application is not limited thereto, and any one skilled in the art may easily conceive of various equivalent modifications or replacements within the technical scope disclosed in the present application, and these modifications or replacements are all included in the protection scope of the present application.

## Claims

1. An inspection method of a product quality inspection device, applied to a product quality inspection device, wherein the method comprises:
acquiring first image data of a first product by a first imaging unit, wherein the first product is obtained through processing at a first process node in a production device, the first imaging unit corresponding to the first process node;
generating a first inspection result of the first product according to the first image data and first inspection information corresponding to the first process node, wherein the first inspection information comprises at least one first inspection item and a preset parameter range corresponding to each first inspection item; and
transmitting the first inspection result to the production device to cause the production device to remove the first product from a production line if the first inspection result comprises that the first product has a defect.

2. The method according to claim 1, wherein the first inspection item is used to indicate a first inspection part in the first product, the first inspection result comprising whether or not the first inspection part indicated by each of the first inspection items has a defect;
generating a first inspection result of the first product according to first inspection information corresponding to the first process node comprises:
determining first collected data of the first product according to the first image data and the first image data, wherein the first collected data comprises a collected value of at least one first product parameter of the first product, the first product parameter being in one-to-one correspondence with the first inspection item;
determining whether a first inspection part corresponding to each first inspection item has a defect according to the preset parameter range corresponding to each first inspection item and the first collected data; and
if the first inspection part corresponding to the first inspection item has a defect, associating the first inspection item with a defect identifier to obtain the first inspection result of the first product, wherein the defect identifier is used to indicate that the first inspection part has a defect.

3. The method according to claim 2, wherein it is determined that the first inspection part corresponding to the first inspection item has a defect if the collected value of the first product parameter corresponding to the first inspection item does not match the preset parameter range corresponding to the first inspection item.

4. The method according to claim 1, wherein acquiring first image data of a first product by a first imaging unit comprises:
acquiring a parameter information set corresponding to the production device, wherein the parameter information set comprises operating parameters of the first imaging unit;
acquiring the operating parameters of the first imaging unit in the parameter information set according to a node identifier of the first process node, and configuring the first imaging unit according to the operating parameters of the first imaging unit; and
photographing the first product by the configured first imaging unit to obtain the first image data.

5. The method according to claim 4, wherein before the first image data is obtained by photographing the first product by the configured first imaging unit, the method further comprises:
photographing a second product by the configured first imaging unit to obtain second image data, wherein the second product comprises at least one second inspection part, and the second inspection part comprises first preset defects, wherein each first preset defect corresponds to a second inspection item;
determining second collected data of the second product according to the second image data, wherein the second collected data comprises a collected value of at least one second product parameter of the second product, the second product parameter being in one-to-one correspondence with the second inspection item;
determining whether each second inspection part has a defect according to the preset parameter range corresponding to each second inspection item and the second product parameter set, and obtaining a second inspection result of the second product; and
controlling the first imaging unit to suspend an operation if the second inspection result does not match defect information in which each of the second inspection parts comprises the first preset defect.

6. The method according to claim 5, wherein the method further comprises:
photographing the first product by the configured first imaging unit to obtain the first image data if the second inspection result matches the defect information in which each of the second inspection parts comprises the first preset defect.

7. The method according to claim 4, wherein after configuring the first imaging unit according to operating parameters of the first imaging unit, the method further comprises:
transmitting the operating parameters according to the first imaging unit to a first monitoring device of the product quality inspection device.

8. The method according to claim 2, wherein if the first inspection part corresponding to the first inspection item has a defect, after associating the first inspection item with the defect identifier to obtain the first inspection result of the first product, the method further comprises:
transmitting the first collected data and the first inspection result to a production execution device;
receiving a third inspection result of the first product transmitted by the production execution device; and
transmitting first control information to the production device to cause the production device to move the first product to a second process node in response to the first control information if the third inspection result of the first product is that the first product has no defect, wherein the second process node is a process node downstream of the first process node.

9. The method according to any one of claims 2 to 7, wherein after generating a first inspection result of the first product according to first inspection information corresponding to the first process node, the method further comprises:
transmitting the first collected data and the first inspection result to a server, so that the server stores the first inspection result of the first product at the first process node.

10. The method according to claim 1, wherein after generating a first inspection result of the first product according to first inspection information corresponding to the first process node, the method further comprises:
acquiring first inspection results respectively corresponding to a plurality of first products processed by the first process node within a preset time period;
determining a product defect rate corresponding to the first process node within the preset time period according to a plurality of the first inspection results; and
if the product defect rate is greater than a preset defect threshold, suspending acquisition of the image data of the first product, and transmitting second control information to the production device to cause the production device to suspend operation in response to the second control information.

11. The method according to claim 7, wherein after generating a first inspection result of the first product according to first inspection information corresponding to the first process node, the method further comprises:
supplying the first product to a second monitoring device of the product quality inspection device to cause the second monitoring device to generate a fourth inspection result of the first product;
if the fourth inspection result of the first product does not match the first inspection result, receiving third control information transmitted by the second monitoring device, wherein the fourth inspection result is inspected by the second monitoring device; and
controlling the first imaging unit to suspend acquisition of image data in response to the third control information.

12. The method according to claim 1, wherein the production device comprises a plurality of process nodes, and the product quality inspection device comprises an imaging unit in one-to-one correspondence with each of the process nodes;
before acquiring first image data of a first product, the method further comprises:
acquiring a Measuring System Analyzing (MSA) guidance document set, wherein the MSA guidance document set comprises an MSA guidance document corresponding to each of the process nodes in the production device;
determining, according to indication information in the MSA guidance document corresponding to each of the process nodes, a processed product output channel corresponding to each of the process nodes, inspection information corresponding to each of the process nodes, and a data output type of an inspection result corresponding to the process node, wherein the data output type is a metrology type or a counting type;
acquiring image data respectively collected by a plurality of imaging units for an inspection sample set, wherein the inspection sample set comprises a plurality of inspection samples each comprising at least one third inspection item, wherein the plurality of inspection samples comprise a first predetermined number of non-defective products and a second predetermined number of defective products;
generating, for each of the process nodes, an inspection result of each third inspection item in each of the inspection samples according to image data collected by the imaging unit;
determining an inspection accuracy rate of the product quality inspection device according to the inspection result of each of the third inspection items in each of the inspection samples and a reference result of each of the third inspection items in each of the inspection samples; and
acquiring the first image data of the first product if all the inspection accuracy rates are greater than a preset accuracy rate threshold.

13. An inspection apparatus of a product quality inspection device, comprising:
a first imaging unit, configured to acquire first image data of a first product by a first imaging unit, wherein the first product is obtained through processing at a first process node in a production device, the first imaging unit corresponding to the first process node;
a data processing unit, configured to generate a first inspection result of the first product according to the first image data and first inspection information corresponding to the first process node, wherein the first inspection information comprises at least one first inspection item and a preset parameter range corresponding to each first inspection item; and
a transmitting unit, configured to transmit the first inspection result to the production device to cause the production device to remove the first product from a production line if the first inspection result comprises that the first product is defective.

14. An electronic device comprising a processor and a memory storing computer program instructions; and
the processor reads and executes the computer program instructions to implement an inspection method of a product quality inspection device according to any one of claims 1-13.

15. A readable storage medium having stored thereon computer program instructions which, when executed by a processor, implement an inspection method of a product quality inspection device according to any one of claims 1-13.

16. A computer program product in which instructions, when executed by a processor of an electronic device, cause the electronic device to perform an inspection method of a product quality inspection device according to any one of claims 1-13.
